# EUROPEAN PATENT SPECIFICATION

(11) **EP 0 661 512 B1**
(45) Date of publication and mention of the grant of the patent: **11.03.1998**
(21) Application number: 94307540.8
(22) Date of filing: 13.10.1994
(51) Int. Cl.: F28F 25/02

(54) **Cooling tower**
Kühlturm
Tour de refroidissement

(30) Priority: 29.12.1993 JP 349672/93
(43) Date of publication of application: 05.07.1995
(73) Proprietor: ISHIKAWAJIMA-HARIMA JUKOGYO KABUSHIKI KAISHA, Chiyoda-ku Tokyo-to (JP)
(72) Inventor: Kato, Kanji, Chiba-shi, Chiba-ken (JP)
(74) Representative: Jennings, Nigel Robin

(56) References cited:
- DE-C- 346 005
- FR-A- 2 236 158
- FR-A- 2 279 049
- FR-A- 2 283 410
- GB-A- 1 388 726
- GB-A- 2 081 863
- PATENT ABSTRACTS OF JAPAN vol. 9 no. 316 (M-438) ,12 December 1985 & JP-A-60 149896 (NIHON SPINDLE SEIZOU) 7 August 1985,
- PATENT ABSTRACTS OF JAPAN vol. 007 no. 291 (M-265) ,27 December 1983 & JP-A-58 164998 (OBAYASHI GUMI KK) 29 September 1983,
- PATENT ABSTRACTS OF JAPAN vol. 004 no. 084 (M-016) ,17 June 1980 & JP-A-55 043327 (HITACHI REIKI KK) 27 March 1980,

## Description

The present invention relates to a cooling tower and is concerned with a cooling tower of the type including a water vessel in whose base a plurality of water spray ports is formed and below which there is one or more heat exchange units stacked one above the other, the heat exchange unit or at least the upper heat exchange unit comprising a plurality of heat exchange members extending substantially parallel to one another to define flow passages therebetween and means for passing ambient air transversely through the flow passages to cool the water, the flow passages being associated with respective water spray ports, and the cooling tower including control means arranged selectively to permit water to flow through all the water spray ports or to prevent water from flowing through some or all of selected water spray ports.

There has been an increasing demand for cooling towers for cooling water which is used in large quantities in various plants, factories, buildings and the like.

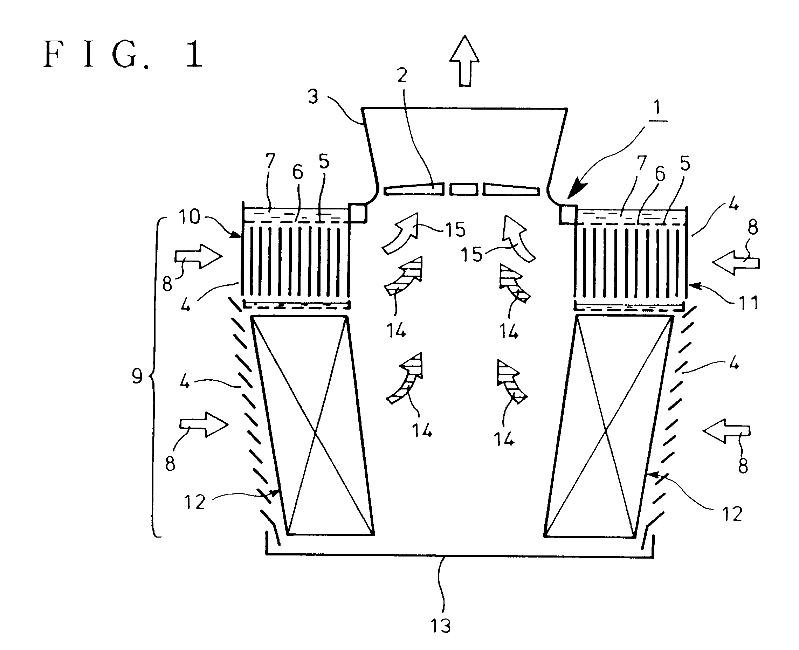

Figure 1 is a diagrammatic vertical sectional view from the front of a known cooling tower which includes an outlet 3 with an axial flow fan 2 at a top of a casing 1, air inlets 4 in the outer periphery of the casing 1, an upper water vessel 5 at the upper portion of the casing 1 and a heat exchanger 9 below the water vessel 5. Water 7 to be cooled is sprayed through spray ports 6 of the vessel 5 and exchanges or gives up its heat to cross flowing ambient air 8 which is sucked transversely into the casing 1 through the air inlets 4, thereby cooling the water 7.

The heat exchanger 9 may have a dry type air heating unit 11 in the form of finned tubes 10 immediately below the water vessel 5 and a filler unit 12 in the form of a number of heat transfer surface members with irregular surfaces, made of sheet-like synthetic resin and arranged parallel to one another to define flow passages or in the form of assembled sheet-like members. Reference numeral 13 denotes a lower water vessel below the filler unit 12 to recover the cooled water.

With the cooling tower of the type described above, the water 7 flows down through the finned tubes 10 of the dry type air heating unit 11 and then over the heat transfer surface members of the filler unit 12 while the ambient air 8 is sucked through the inlets 4 and is directed to flow transversely of the units 11 and 12, thereby cooling the water 7.

The water 7 flowing down along the heat transfer surface members of the filler unit is in direct heat-exchange relationship with the ambient air 8 and is effectively cooled. The cooling ability or capability of the cooling tower is substantially dependent upon the volume of the filler unit 12. Having absorbed heat from the water 7 in the filler unit 12, the air 8 becomes wet air 14 at high temperature and with a moisture content of substantially 100%. If the wet air 14 were directly discharged out of the cooling tower, it would become condense and appear in the form of steam or white smoke when the ambient temperature is low. Such steam is intensely disliked by local inhabitants since it gives the impression of contaminating their environment. Moreover, there is the fear that the steam may be mistaken at night for a fire due to an optical illusion or the like. There is thus an increasing desire to prevent such visible steam from being generated.

To this end, in the cooling tower as shown in Figure 1, in which the water 7 flows down through the finned tubes 10, the ambient air 8 flowing past the outer peripheral surfaces of the tubes 10 is heated in dry manner to become dry air 15 having an extremely low moisture content. The dry air 15 is mixed with the wet air 14 by the fan 2 to reduce the moisture content of the air discharged through the outlet 3, thereby preventing steam from being generated.

Such a cooling tower with a dry type air heating unit 11 is structurally complex and extremely expensive to manufacture. Due to the fact that the heat exchange through the finned tubes 10 is indirect, the heat exchange efficiency cannot be satisfactorily enhanced and to compensate for this it is known for the size of the dry type air heating unit 11 to be increased in size. It follows therefore that if the volume of the filler unit 12, which constitutes a major portion of the cooling capacity, is not changed, the cooling tower must be increased in height or volume and if this is not done the height or volume of the filler unit 12 must be reduced and the cooling efficiency drops.

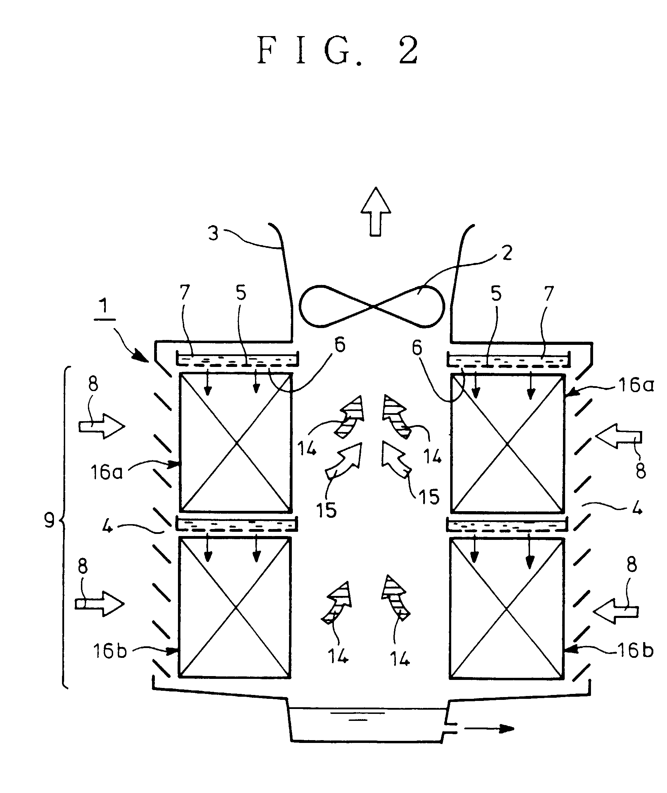

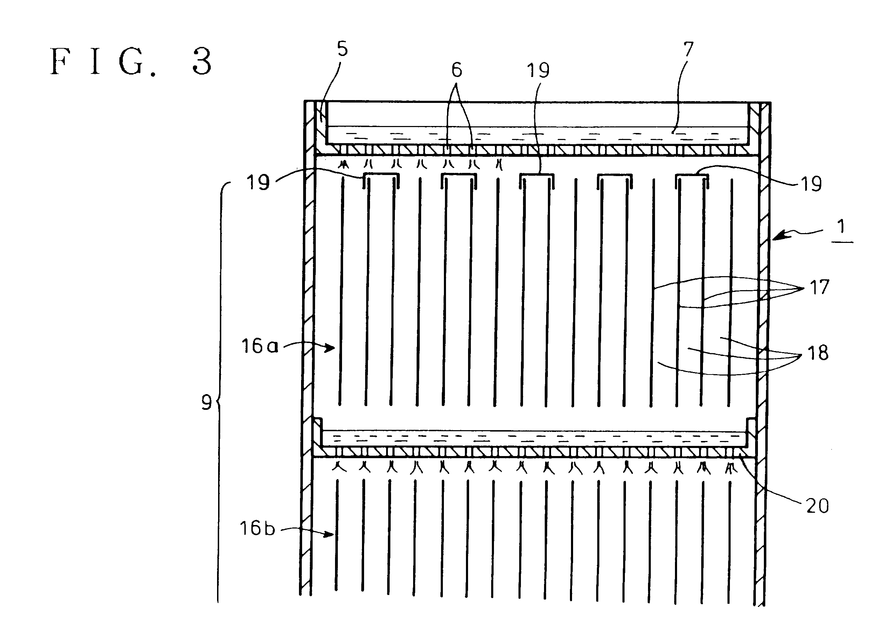

In order to overcome these problems, a cooling tower has been proposed, as shown in Figures 2 and 3 which are a view similar to Figure 1 and a diagrammatic scrap vertical sectional view from the side, respectively, of a further known cooling tower. This heat exchanger 9 comprises at least two stacks of, or upper and lower, filler units 16a and 16b. The uppermost filler unit 16a has heat exchange surface members 17 with irregular surfaces and made of sheet-like synthetic resin which extend parallel to each other to define flow passages 18. Some of the flow passages 18 are closed at their tops with caps 19 so that the water 7 is prevented from flowing down through them. If need be, the caps 19 may be of opening and closing type. Reference numeral 20 denotes an intermediate water vessel.

Since caps 19 are provided for closing some of the flow passages 18, no water 7 but only ambient air 8 flows down through the closed flow passages 18 to produce the dry air 15. The dry air 15 is mixed with the wet air 14 which has cooled the water 7 at the non-closed flow passages 18 in the upper filler unit 16a and at the lower filler unit 16b, which is similar to the unit 16a but has no closed passages, and the mixed air is discharged, and the generation of visible steam is suppressed.

If the caps 19 are of opening and closing type, as mentioned above, all the caps 19 may be opened to make the water 7 flow down over all of the heat exchange surface members 17 in order to maximize the cooling capability of the filler units 16a and 16b.

However, such caps have drawbacks. If the caps 19 are securely attached to the upper ends of the associated flow passages 18, spaces always remain in the upper filler unit 16a which produce dry air even when the cooling tower is being used in a condition in which there is no risk of steam generation, which accordingly lowers the cooling capability of the cooling tower.

Furthermore, the operation of closing or opening the caps 19 is very cumbersome. Due to the fact that the heat exchange surface members 17 are made of sheet-like synthetic resin for weight-saving purposes and arranged narrowly spaced apart, it is technically very difficult to install the caps 19. Even if the caps 19 are successfully installed at the upper ends of the flow passages 18, their structure is very complicated and their maintenance is extremely difficult since the moving parts are within very confined spaces. Thus, the use of such covers is in fact impractical.

FR-A-2283410, on which the precharacterising portion of Claim 1 is based, discloses a cooling tower including a heat exchange unit comprising a plurality of parallel heat exchange members which define flow passages therebetween and terminate short of the base of a plurality of water vessels situated above them. Each flow passage is associated with a respective water vessel and communicates therewith via a plurality of spray ports. Certain of the water vessels are supplied with water by a first water pipe and the remaining water vessels are supplied with water by a second water pipe. In normal weather conditions, in which there is no risk of the moist air discharged from the cooling tower condensing to form steam, water is supplied through the first and second water pipes into all the water vessels and is thus permitted to spray through all the spray ports. However, in adverse weather conditions, in which there is a risk of the discharged moist air condensing to form steam, water is supplied through only one of the water pipes to certain of the water vessels and is thus permitted to spray through certain of the spray ports and not the remainder. Air which passes through those flow passages which are associated with spray ports through which no water is sprayed is supposed to be heated only and not to have its humidity increased and this air is subsequently mixed with the air which has flowed through the other flow passages so as to reduce its relative humidity and thus its tendency to form condensation.

GB-A-2081863 discloses a cooling tower including a heat exchange unit comprising a plurality of heat exchange members which define flow passages therebetween. At least some of the flow passages have hoods, each of which has a two-sided top open to water spray pipes on one side but not the other, whereby the walls of certain flow passages are wetted by water and the remainder are not. The heated, humid cooling air which flows through the certain flow passages is subsequently mixed with the heated, relatively dry air flowing through the other flow passages prior to discharge into the atmosphere.

FR-A-2236158 discloses water cooling or heating apparatus including a heat exchange unit comprising a plurality of parallel plates defining flow passages therebetween. Two water supply pipes are provided above the heat exchange unit to spray water onto the surface of the plates defining respective associated sets of flow passages. If the apparatus is used to cool water by means of air flowing through the passages and a reduced humidity of the discharged air is required, water is supplied through only one of the supply pipes and the warmed, relatively humid air leaving one set of flow passages is mixed with the warmed, less humid air leaving the other set of flow passages.

FR-A-2279049 discloses an air conditioner heat exchanger comprising two cross-flow heat exchanger units one above the other, each comprising a plurality of plates defining flow passages therebetween. Water is supplied to the top of the upper heat exchanger unit and permitted to flow down the surfaces of the plates thereof and extracts heat from exhausted warm air flowing through the flow passages. Incoming fresh air is passed through the lower heat exchanger unit and is warmed by the water which was heated in the upper heat exchanger unit.

Accordingly, it is the object of the present invention to provide a cooling tower which is both simple and reliable and which permits the generation of visible steam at the outlet of the cooling tower to be prevented regardless of the climatic conditions.

According to the present invention, this object is achieved by a cooling tower of the type defined in claim 1.

Thus in the cooling tower in accordance with the invention water is permitted to flow through all the water spray ports and thus through all the flow passages under ordinary weather conditions, e.g. in summer, where there is little or no risk of steam being produced. Direct cooling of the water by the ambient air thus occurs in all the flow passages and the cooling tower may thus operate at maximum capacity to cool the water. The air discharged to the atmosphere will have a relatively high moisture content but due to the favourable weather conditions condensation does not occur and thus no steam is produced. However, in weather conditions in which the production of steam is possible, such as in winter, no water is permitted to spray through some or all of the selected water spray ports whereby some or all of the flow passages associated with the selected spray ports have no water flowing through them. The air flowing through these flow passages is then dry heated, that is to say heated by thermal conduction through the heat exchange members and its moisture content is not increased at all. The air flowing through the remaining flow passages directly cools the water flowing down the heat exchange members in the usual manner and thus has its water content substantially increased. The heated dry and wet air are then mixed together and discharged to the atmosphere and its water content is adjusted to be such that substantially no condensation occurs and thus substantially no steam is produced. The adjustment of the water content of the discharged air may be effected by altering the number of the selected water spray ports through which no water is permitted to flow.

In one embodiment of the invention the control means comprise inlet means which communicate with the selected water spray ports and have one or more inlet openings disposed above the water spray ports and liquid level control means for controlling the height of the liquid level in the water vessel and for varying it between levels above and below the inlet openings. Under normal weather conditions the water level in the water vessel is maintained above the water inlet openings so that water flows through all the water spray ports. However, under winter conditions the water level is permitted to drop below the level of the inlet openings whereby no water is permitted to flow through the selected water spray ports.

The inlet openings of the inlet means associated with different flow passages may be arranged at different heights and if the water level in the water vessel is then varied incrementally the number of the water spray ports through which water is permitted to flow may then be varied progressively so as to vary the water content of the discharged air progressively thereby permitting the cooling capacity of the cooling tower to be maximized regardless of the weather conditions whilst still taking account of the requirement that substantially no steam should be produced.

The liquid level control unit may include liquid level detectors to enable the liquid level in the water vessel to be detected and suitably controlled in response to output signals from the detectors.

A cooling tower in accordance with the invention may have a single heat exchange unit of the type referred to above or it may have two or more heat exchange units of which at least the uppermost unit is of the type referred to above and some or all of the remainder may also be of this type. In this case, a water vessel is preferably provided between each adjacent pair of heat exchange units and a water deflecting plate is provided above each of the inlet openings of the or each lower heat exchange unit to prevent water dripping down from the heat exchange unit above it from falling directly into the inlet openings.

In a second embodiment of the invention the cooling tower includes valves controlling the selected water spray ports and connected to valve drive means for selectively opening or closing the valves. As will be clear, the valves are opened in normal weather conditions to permit water to flow through all the water spray ports but under adverse conditions, as in winter, some or all of the valves are closed to reduce the number of the water spray ports through which water is permitted to flow thereby reducing the moisture content of the discharged water and thus permitting the cooling capacity of the cooling tower to be at the maximum value consistent with the aim of producing substantially no visible steam. The valves may carry water dispersing plates which are situated below the associated water spray ports to disperse the water flowing through the ports and cause it to impinge against the associated heat exchange members, thereby maximizing the cooling effect.

In a third embodiment of the invention the cooling tower includes inlet means of variable height which communicate with the selected water spray ports and have one or more inlet openings disposed above the water spray ports and lifting means arranged to vary the height of the inlet means and thus of the inlet openings. The method of operation of this embodiment includes lowering the inlet means and thus the inlet openings to a level below the water level in the water vessel in normal weather conditions but raising the inlet openings of some or all of the inlet means to a level above the water level in the water vessel in adverse weather conditions.

The flow passages associated with the selected water spray ports are so constructed that no water from the other spray ports may enter them. For this purpose, a substantially sealed chamber is provided around each selected water spray port whose only outlet is into the associated flow passage. Such chambers may be defined by extending the heat exchange members themselves up to the underside of the water vessel. This will minimize the space between the heat exchange unit and the water vessel and is very effective in cooling towers which are initially constructed to be in accordance with the invention. Alternatively, existing cooling towers, in which conventionally the heat exchange members terminate some distance below the underside of the water vessel, may be converted to be in accordance with the invention by retrofitting partition plates which extend from the underside of the water vessel around each of the selected water spray ports down to the heat exchange members defining the associated flow passage.

Further features and details of the present invention will be apparent from the following description of certain preferred embodiments thereof which is given by way of example with reference to Figures 4 to 19 of the accompanying drawings, in which:-
Figure 4 is a side view in vertical section of a first embodiment of the present invention;
Figure 5 is a scrap sectional view on an enlarged scale thereof;
Figure 6 is a scrap perspective view illustrating the inlet means shown in Figure 5;
Figure 7 is a scrap perspective view illustrating a modification of the inlet means shown in Figure 6;
Figure 8 is a scrap perspective view illustrating a further modification of the inlet shown in Figure 6;
Figure 9 is a detailed scrap sectional view illustrating a modification of the chamber shown in Figure 5;
Figure 10 is a view looking in the direction indicated by the arrow X in Figure 9;
Figure 11 is a vertical sectional view of a modified embodiment of the invention;
Figure 12 is a scrap vertical sectional view illustrating a modification of the inlet means shown in Figure 11 with different heights;
Figure 13 is a detailed scrap sectional view of a second embodiment of the present invention;
Figure 14 is a view in the direction of the arrows XIV-XIV in Figure 13;
Figure 15 is a scrap side view illustrating a modification of the valve structure shown in Figure 13;
Figure 16 is a scrap side view illustrating a further modification of the valve structure shown in Figure 13;
Figure 17 is a side view in vertical section of a third embodiment of the present invention;
Figure 18 is a detailed scrap view thereof; and
Figure 19 is a view similar to Figure 18 but shows the upper water intake port of the inlet means in the lowered position.

The same reference numerals are used to designate similar parts throughout the figures.

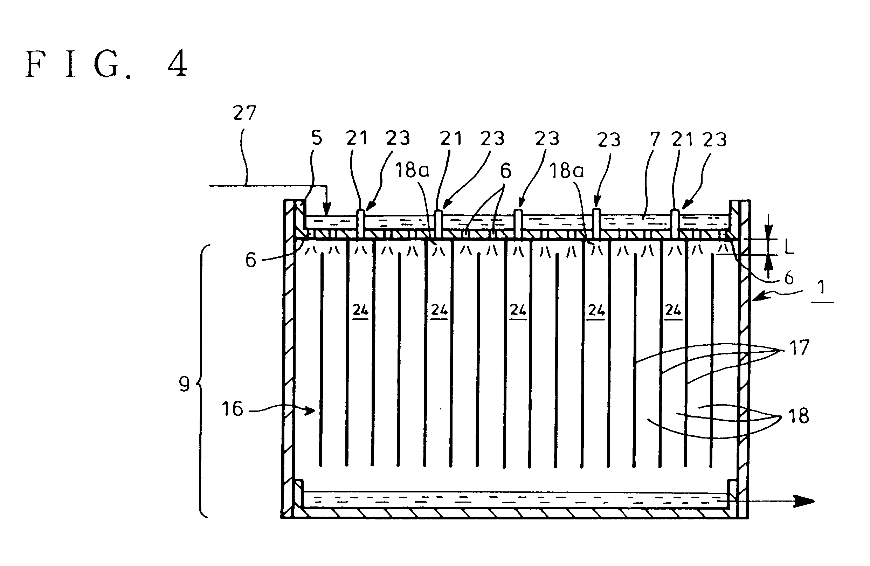

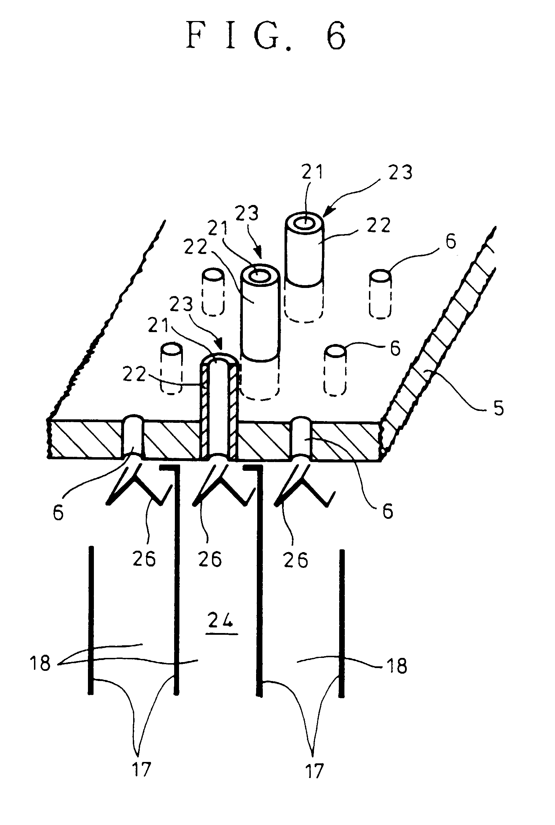

In the first embodiment of the present invention shown in Figures 4 to 6, the heat exchanger 9 for heat exchange between water 7 to be cooled and ambient air 8 comprises a single filler or heat exchange unit 16 having a plurality of heat exchange surface members 17 extending parallel to one another to define flow passages 18.

The construction is generally similar to that illustrated in Figures 2 and 3 in that a water vessel 5 for storing water to be cooled is provided above the filler unit 16. Formed in the base of the vessel is a plurality of spray ports constituted by apertures 6. Certain of the heat exchange members 17 terminate short of the base of the water vessel and the flow passages 18 defined by these heat exchange members communicate with one or more spray ports 6 which are arranged to spray water into them. However certain adjacent pairs of the heat exchange members 17 extend up to the base of the water vessel and their upper ends define respective chambers 18a. The flow passages 18 defined by these heat exchange members communicate through the chambers 18a, situated in a water spray space or zone L, with inlet means 23. Each of the inlet means 23 comprises a water intake pipe 22 having an upper water intake port 21 located at a predetermined height above the bottom or water spray ports 6 of the upper water vessel 5. Thus certain of the flow passages 18 constitute spaces 24 which are selectively dry or wet.

Those heat exchange members 17 which extend upwardly to the water vessel 5 are connected thereto by mounting members 25 on its undersurface. Each water intake pipe 22 is securely fitted into a water spray port 6 which communicates with the flow passage 18 defined by the said heat exchange surface members 17. A dispersing or deflecting plate 26 is disposed below each water spray port 6 in the flow passages 18 and below each water inlet pipe 22 in the selective dry/wet spaces 24 so as to disperse the water 7 over the heat exchange members 17.

The dispersing plates 26 may be eliminated if a sufficient water spray over the heat exchange members 17 is ensured by arranging the water spray ports 6 and the water inlet pipes 22 closely together and/or by using water spray nozzles (not shown) of the type which have been used in conventional cooling towers. Instead of the heat exchange members 17 being mounted via the mounting members 25 on the undersurface of the water vessel 5, the members 17 may be suspended from a supporting frame comprising the mounting members 25, which are made of hard material.

The water 7 to be cooled is supplied to the water vessel 5 through a water supply pipe 27 having a flow regulating valve 28. A liquid level control unit, generally indicated by reference numeral 38, serves to control the volume of water supplied to the water vessel 5 such that the degree of opening of the valve 28 is controlled in response to a switching signal 30 applied to a controller 29. The control unit 38 also has two low liquid level detectors 31 and 32 and two high liquid level detectors 33 and 34. Output signals from the detectors 31, 32, 33 and 34 are applied to the controller 29 which is arranged to maintain the level of the water 7 in the water vessel 5 within a required range. More particularly, the low liquid level detectors 31 and 32 monitor and maintain the water level in the water vessel 5 within a predetermined range below the upper water intake port 21 of the inlet means 23 and the high liquid level detectors 33 and 34 monitor and maintain the liquid level in the water vessel 5 in a predetermined range above the upper water intake port 21 of the inlet means 23.

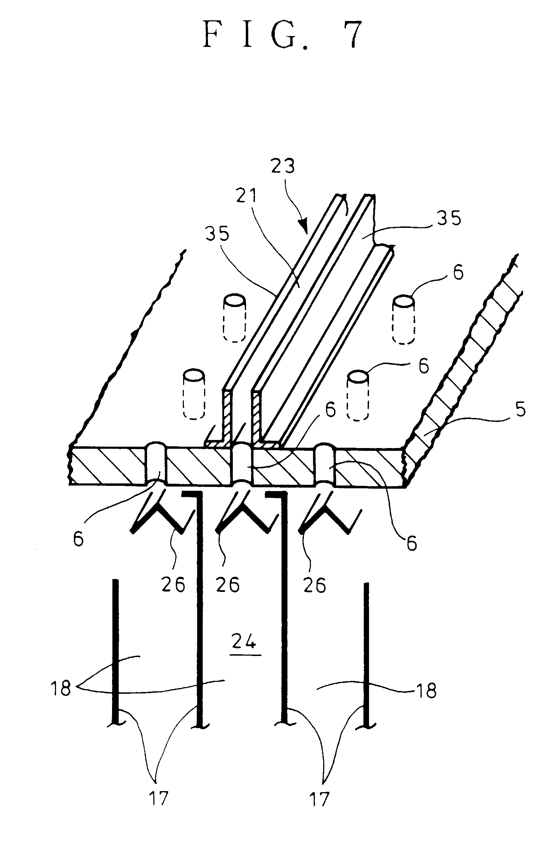

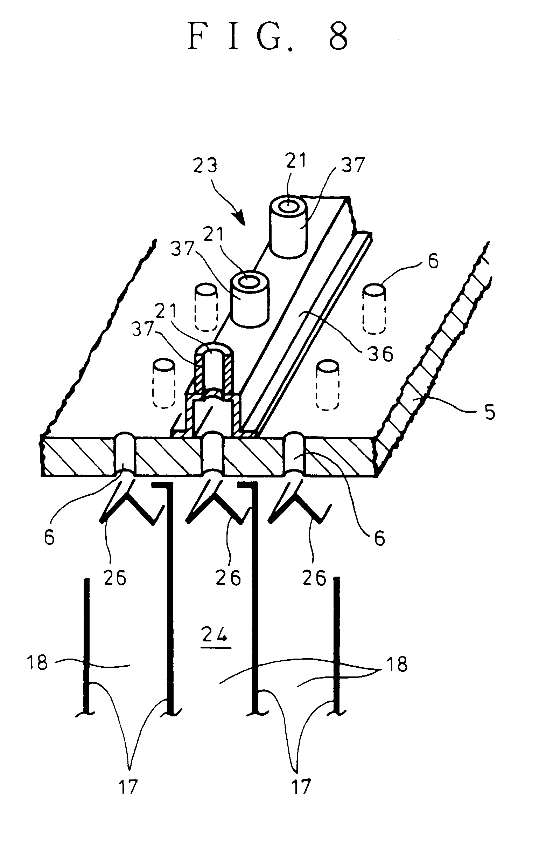

Figures 7 and 8 illustrate modifications of the inlet means 23. In Figure 7, a pair of water intake plates 35 of predetermined height are mounted on or extend up from the bottom of the water vessel 5 such that those water spray ports 6 which communicate with those flow passages 18 which constitute selectively dry/wet spaces 24 are positioned between the pair of water intake plates 35, thereby providing a slit-like upper water intake port 21. In Figure 8, an inverted channel member 36 is disposed at the bottom of the water vessel 5 such that it encloses the water spray ports 6 which communicate with those flow passages 18 which constitute selectively dry/wet spaces 24. Water intake pipes 37, each having an upper water intake port 21, extend upwardly from a top of the channel member 36.

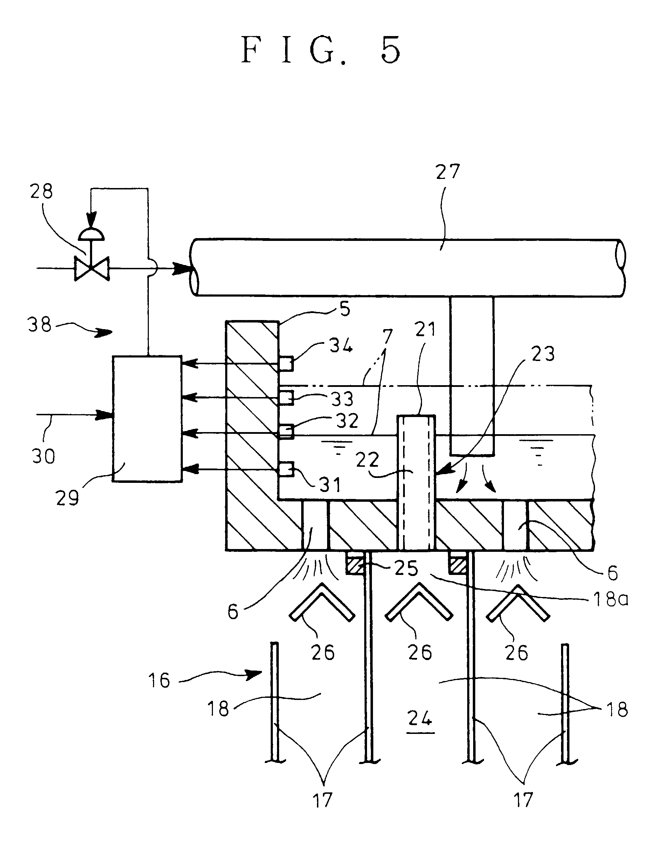

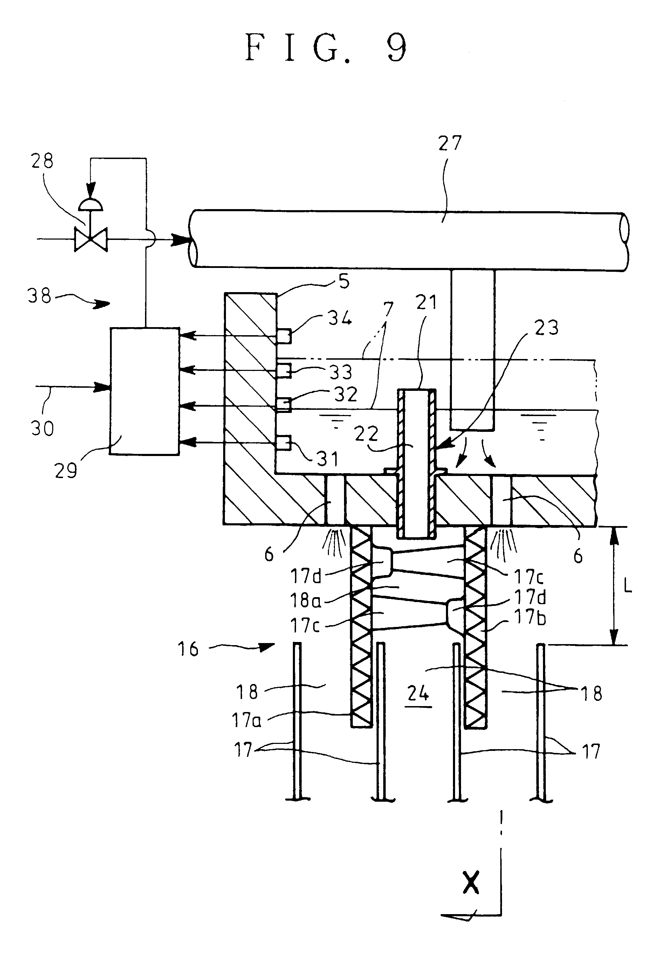

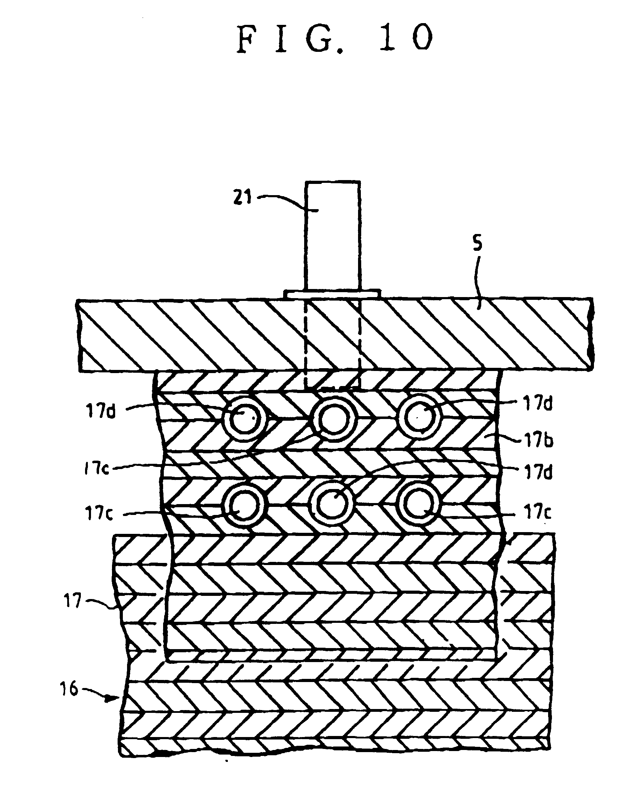

Figures 9 and 10 illustrate a modification of the chamber 18a shown in Figure 5. In order to connect a predetermined flow passage 18 with the inlet means 23 through the chamber 18a, partition plates 17a and 17b, fabricated from corrugated plastic sheet, are connected to the outer surfaces of the heat exchange members 17 such that the upper ends of the partition plates 17a and 17b contact the undersurface of the water vessel 5 while their lower ends extend beyond the upper ends of the heat exchange members 17, thereby defining the chamber 18a which communicates with the selectively dry/wet space 24. The partition plates are produced by heating a thin resin sheet to a plastic state and press-working it into a unitary structure with ridges and valleys and opposed pairs of long and short projections 17c and 17d. These projections are visible as recesses when the partition plates are viewed from the rear. As shown in Figure 9, the complementary long and short projections 17c, 17d extend towards one another and are bonded together with adhesive. These bonded projections 17c and 17d serve to disperse the water 7. This structure comprising the partition plates 17a and 17b described above may be satisfactorily retrofitted to any existing cooling tower having a water spray space or zone L.

Under normal conditions with no fear of visible steam being generated due to the fact that the ambient temperature is not very low, a switching signal 30 for maintaining the liquid level in the water vessel 5 at a higher level is supplied to the controller 29 of the liquid level control unit 38 so that the level of the water 7 in the vessel 5 is above the upper intake port 21. In response to the switching signal 30, the controller 29 increases the degree of opening of the flow regulating valve 28 and at the same time receives output signals from the liquid level detectors 31-34 to control the degree of opening of the flow rate regulating valve 28 such that the level of the water in the water vessel 5 is always between the high liquid level detectors 33 and 34.

In this way, the water level in the upper water vessel 5 is maintained as indicated by the two-dot chain line at a level higher than the upper water intake ports 21. Therefore, the water 7 is sprayed via the spray ports 6 and the inlet means 23 over the all heat exchange members 17 so that direct cooling of the water 7 by the ambient air 8 (see Figure 2) is carried out in all the passages 18. Thus, as in summer, when a large quantity of water is required and there is no fear of steam being generated, the whole of the filler unit 16 can be utilized at maximum capacity to maximize the cooling capacity.

Under colder conditions, as in winter, when there is a risk of steam being generated, a switching signal 30 for maintaining the water level in the water vessel 5 at a lower level is applied to the controller 29 which in turn automatically controls the flow regulating valve 28 such that the liquid level is maintained between the low liquid level detectors 31 and 32. When this occurs, the spraying of the water 7 into the selectively dry/wet spaces 24 communicating with the upper water intake ports 21 is stopped or interrupted. As a result, the direct cooling of the water 7 by the ambient air 8 in the flow passages 18 into which the water 7 is sprayed is carried out simultaneously with the dry heating of the ambient air 8 flowing through the spaces 24 into which no water 7 is sprayed. The wet air 14 (see Figure 2) resulting from the direct cooling in the flow passages 18 is mixed with the dry air 15 resulting from the dry heating in the spaces 24, whereby no steam is generated.

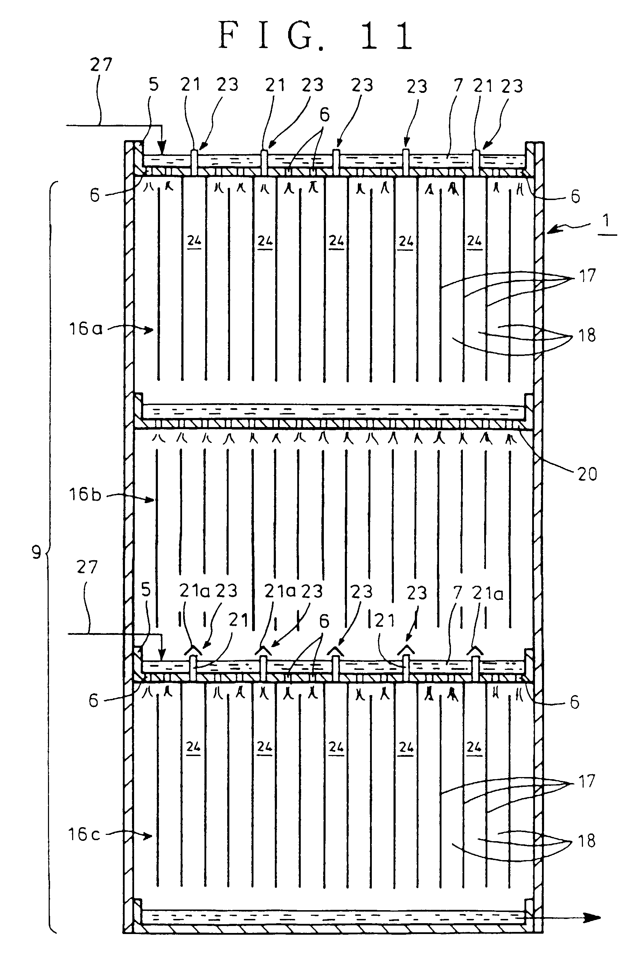

Figure 11 illustrates a cooling tower including a plurality of filler units of the type shown in Figure 4 stacked vertically. The cooling capacity of the heat exchanger 9 may be varied by stacking any desired number of filler units on one another and in this case there are three such units 16a, 16b and 16c. Selected filler units, in this case 16a and 16c, are of the type described with reference to Figure 5. The number and position of the filler units of the type shown in Figure 5 having the inlet means 23 and the liquid level control unit 38 and the combination of such filler units with other types of filler unit may be varied, as required. The filler unit (16b in the figure) which has no inlet means 23 and no liquid level control unit 38 may be of any type and is not necessarily of the type in which the flow passages 18 are defined by heat exchange surface members 17.

A filler unit (16c in the figure) other than the uppermost filler unit may have the inlet means 23 and liquid level control unit 38. In this case, a water deflecting plate 21a is installed over each upper water intake port 21 so as to prevent the water 7 from the filler unit above it (16b in the figure) from flowing directly into it.

The water 7 is partly evaporated and thus of reduced volume by the time it reaches the water vessel 5 of the filler unit (16c in the figure) other than the uppermost filler unit. Therefore, at the filler unit 16c, water is supplied through a water supply pipe 27 to the water vessel 5 to compensate for the evaporated water, thereby adjusting the water level.

Like the filler unit shown in Figures 4, 5 and 6, the stacked filler units shown in Figure 11 may be operated at maximum capacity in normal weather conditions. If the weather is such that there is a possibility of steam being generated, the selectively dry/wet spaces 24 may be utilized to prevent this.

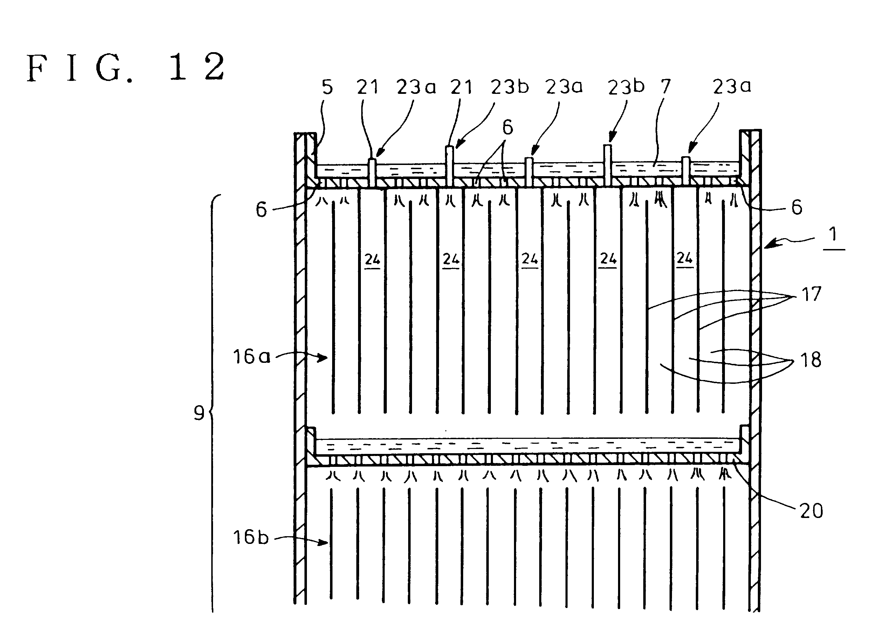

Figure 12 shows a modification in which the inlet means 23 have different heights. In order that the water 7 may flow through some of the spaces 24 and not through others, inlet means (23a and 23b in the figure) of different heights are used, though the height of all the upper intake ports 21 which communicate with one and the same space 24 is the same. When inlet means 23, as shown in Figure 12, having different heights are utilized for the single filler unit shown in Figure 4 or for the stacked filler units shown in Figure 11, the volume of the dry air (see Figure 2) generated can be controlled or adjusted by varying the water level in the tank 5 depending upon the weather conditions in order to just prevent steam being generated, so that unnecessary generation of dry air 15 can be avoided.

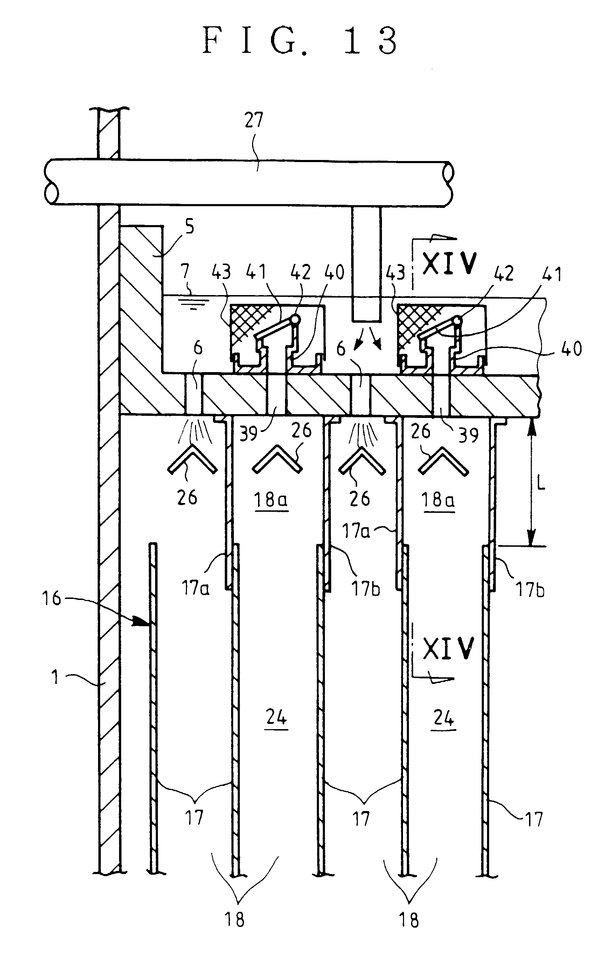

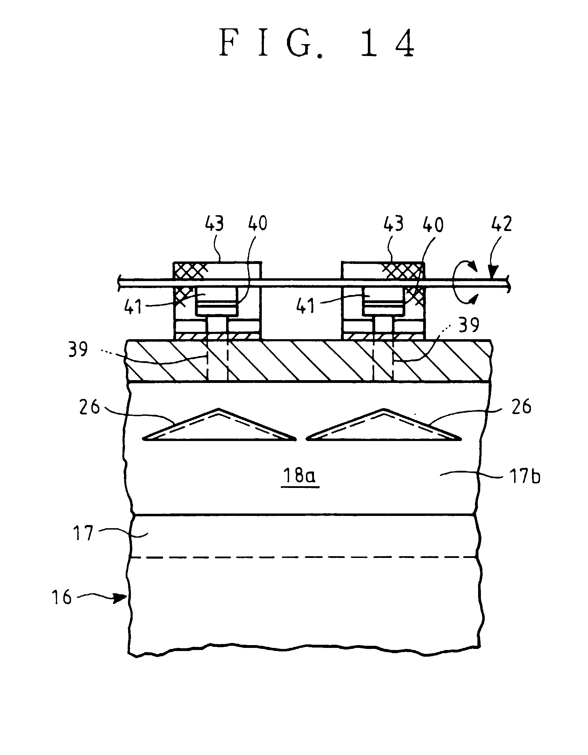

A second embodiment of the present invention is shown in Figures 13 and 14. In order that the water 7 may be caused to flow through some but not others of the flow passages 18, the bottom of the water vessel 5 is formed with water flow ports 39 in communication with the chambers 18a. A short upstanding pipe 40 in communication with each water flow port 39 extends from the bottom of the vessel 5 and a cap-shaped valve 41 for opening and closing the water flow port 39 is provided at the upper end of the pipe 40. As best shown in Figure 14, each array of valves 41 associated with one and the same chamber 18a are carried by a common valve drive 42 in the form of a rotatable shaft so that all the valves 41 can be simultaneously opened or closed. Each pipe 40 is surrounded by a screen 43, such as a wire net, so as to prevent intrusion of dust or the like into the pipe 40.

In normal weather conditions, with no risk of steam being generated, the valve drives 42 are activated to open all the valves 41 so that the water 7 is sprayed through the spray ports 6 and the water flow ports 39 over all the heat exchange members 17, whereby direct cooling of the water 7 flowing through all the passages 18 is effected by the ambient air 8 (see Figure 2). It follows therefore that, when a large quantity of water is required, as in summer, and there is no fear of steam being generated, the filler unit 16 can be operated at maximum capacity to cool the water.

In weather conditions in which there is a possibility of steam being generated, as in winter, the water flow ports 39 are closed by the valves 41 so that no water is sprayed into the spaces 24 through the chambers 18a. Therefore, not only direct cooling of the water 7 by the ambient air 8 (see Figure 2) in the flow passages 18 into which the water 7 is sprayed but also dry heating of the ambient air 8 in the spaces 24 is performed simultaneously. As a result, the wet air 14 generated by the direct cooling in the flow passages 18 in the upper filler unit 16 and a lower filler unit (not shown) is mixed with the dry air 15 generated by dry heating in the spaces 24, thereby preventing steam from being generated.

The valves 41 may be operated by the valve drives 42 such that some of the arrays of valves 41 are opened whilst others are closed. By altering the number of valves which are opened and closed, the quantity of dry air 15 can be controlled in response to the weather conditions, whereby the cooling tower may be operated in a condition such that the water content of the discharged air is just less than that at which steam would be produced regardless of the weather conditions so that the water cooling efficiency is enhanced and wasteful unnecessary generation of dry air is eliminated.

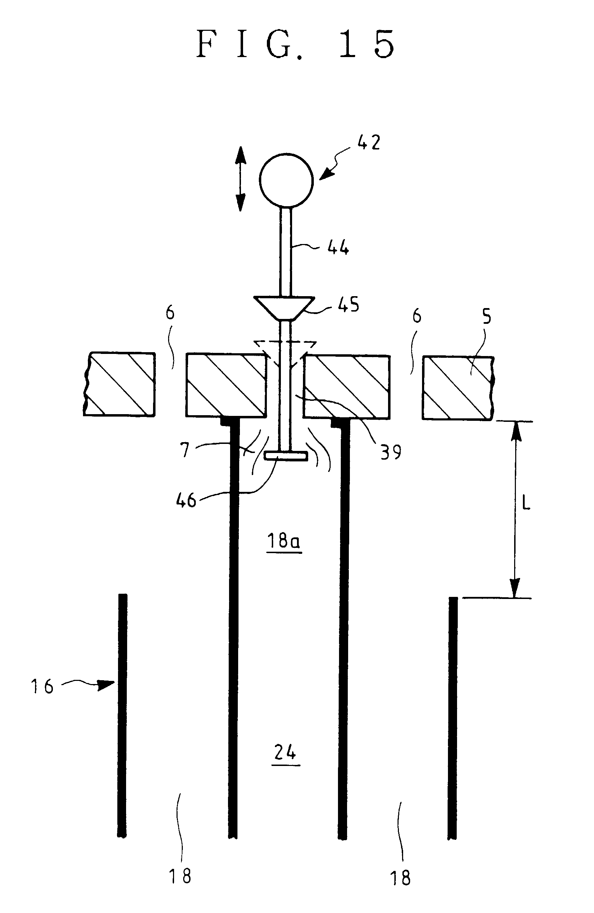

Figure 15 illustrates a modified valve structure including an inverted frustoconical valve 45 adapted to selectively open and close the water flow port 39. The valve is carried by a shaft 44 extending through the water flow port 39 within the upper water chamber 5 and a falling-water dispersing plate 46 is securely attached to the lower end of the shaft 44 within the chamber 18a. The upper end of the shaft 44 is connected to the valve drive 42 in the form of a vertically movable shaft.

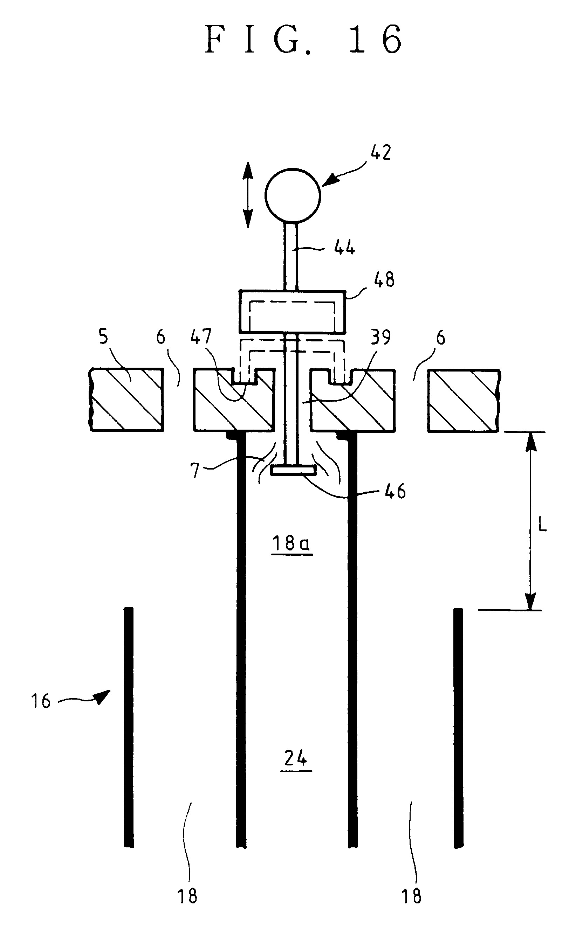

Figure 16 illustrates a further modified valve structure. An annular groove 47 is formed in the bottom surface of the water vessel 5 around the water flow port 39. An inverted saucer-shaped valve 48 adapted to fit into the annular groove 47 is carried by the shaft 44 which extends through the water flow port 39 within the water vessel 5. A water dispersing plate 46 is securely attached to the lower end of the shaft 44 within the chamber 18a. The shaft 44 is connected at its upper end to the valve drive 42 in the form of a vertically movable shaft.

With the valve structure shown in Figure 15 or 16, the water flow port 39 is closed and opened by vertical movement of the valve 45 or 48. When the valve 45 or 48 is opened and the water 7 flows down through the port 39, it impinges against the water dispersing plate 46 and is dispersed so that it tends to adhere to the wall surfaces of the chamber 18a and the heat exchange plates 17, whereby the cooling efficiency is enhanced.

The valves 45 or 48 may be driven by the valves drives 42 such that certain arrays of the valves 45 or 48 are opened whilst others are closed. By changing the number of valves opened and closed, the quantity of dry air 15 can be controlled in response to the weather conditions, whereby the water cooling efficiency is enhanced and wasteful excess generation of dry air is eliminated.

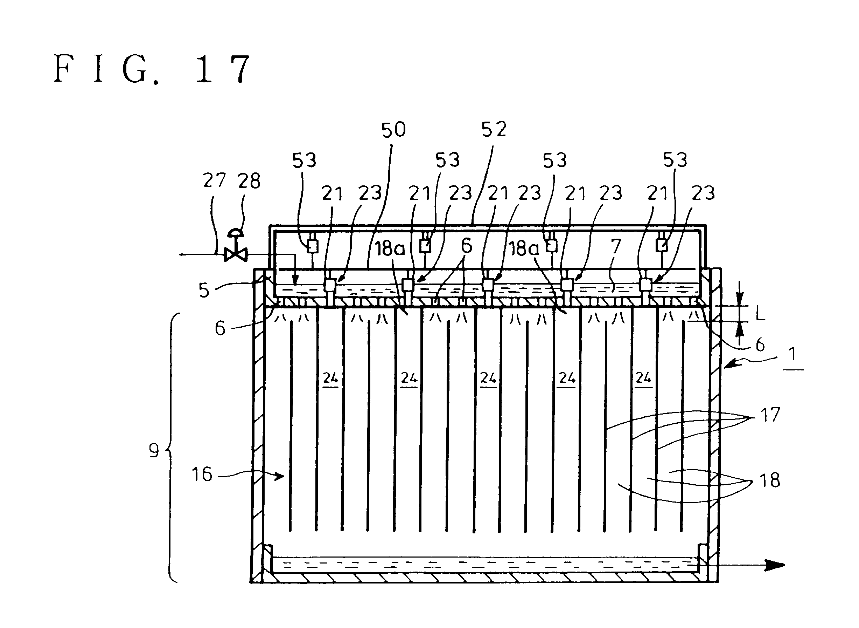

Figures 17-19 show a third embodiment of the present invention in which, as best shown in Figure 17, the heat exchanger 9 for heat exchange between the water 7 and the ambient air 8 comprises a single filler unit 16 having a plurality of heat exchange surface members 17 extending parallel to one another to define the flow passages 18.

The water 7 is supplied through the water supply pipe 27 to the water vessel 5. The degree of opening of the flow regulating valve 28 in the water supply line 27 is controlled in response to, for example, output signals from liquid level detectors (not shown) in the water vessel 5. As a result, the quantity of the water supplied to the vessel 5 is controlled such that the water level in the vessel 5 is maintained at a predetermined level.

Some of the flow passages 18 are provided with inlet means 23 which communicate with an associated passage 18 through chambers 18a defined at the water spray space L. Each of the inlet means 23 has an upper intake port 21 above the spray ports 6 of the vessel 5, whereby selectively dry/wet spaces 24 are defined in some of the flow passages 18.

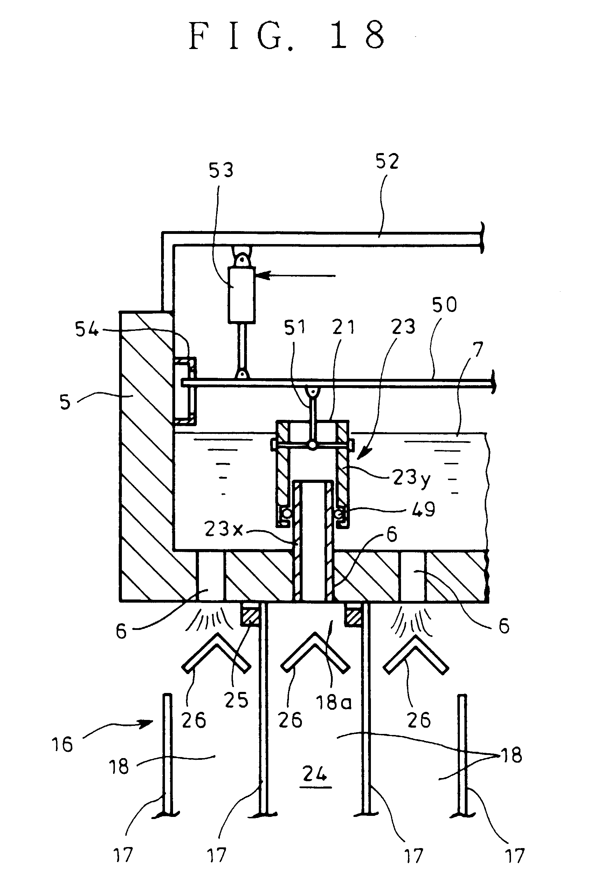

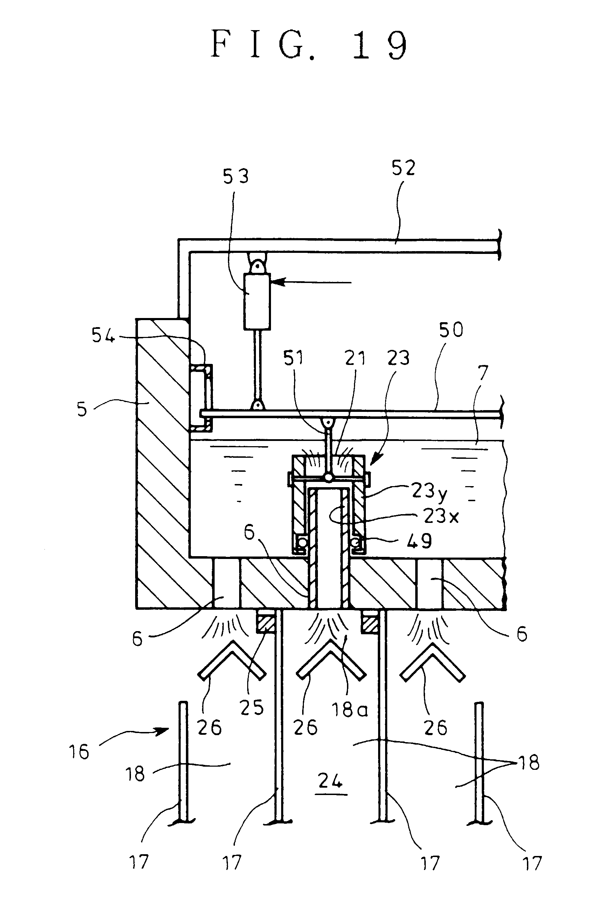

As shown in detail in Figures 18 and 19, each inlet means 23 is in the form of a double pipe comprising a stationary pipe 23x with its lower portion snugly fitted into the spray port 6 and a vertically movable pipe 23y which is fitted over the stationary pipe 23x and sealed to it by means of an O-ring 49. The vertically movable pipes 23y of the inlet means 23 are connected by an attachment member 51 to a horizontal connecting bar 50. The connecting bar 50 is vertically movably supported by extendible and retractable actuators (lift means) 53 which are connected at their upper ends to a supporting frame 52 extending above the water vessel 5.

Each chamber 18a is defined by extending the heat exchange members 17 upwardly and connecting them by mounting members 25 to the undersurface of the water vessel 5. A dispersing plate 26 is installed below each of the water spray ports 6 and each inlet means 23 so that the water 7 is dispersed over the heat exchange members 17 and flows downwardly thereon.

Reference numeral 54 denotes a lift guide on the inner surface of the upper water vessel 5 for engaging with and vertically guiding an associated end of the connecting bar 50.

The mode of operation of the third embodiment is as follows. In normal conditions, with no risk of steam being generated due to the fact that the ambient air temperature is not very low, the actuator 53 is extended to lower the vertically movable pipes 23y such that the upper water intake ports 21 of the pipes 23y are lowered below the level of the water 7 in the water vessel 5. As a result, the water 7 is sprayed not only through the water spray ports 6 but also through the inlet means 23 over all the heat exchange members 17 and the water 7 is directly cooled by the ambient air in the flow passages 18. Therefore, in conditions, such as in summer, when there is no risk of the generation of steam and a large quantity of water is required to be cooled, the whole of the filler unit 16 is operated at maximum capacity to cool the water 7.

In conditions, such as in winter, when there is the possibility of steam being generated, the actuator 53 is retracted as shown in Figure 18 to lift up the pipes 23y at the inlet means 23 such that the water intake ports 21 of the pipes 23y is higher than the water level in the water vessel 5. As a result, the spraying of water into the spaces 24 in communication with the water intake ports 21 is interrupted. Therefore, direct heating of the ambient air 8 in the flow passages 18 and also dry heating of the ambient air 8 flowing through the spaces 24, into which no water 7 is sprayed, are performed simultaneously. The wet air 14 resulting from the direct heating in the passages 18 is mixed with the dry air 15 resulting from the heating in the spaces 24, whereby the overall moisture content of the discharged air is reduced and no steam is produced.

As described above, the switching between direct cooling of the water 7 and dry heating of the ambient air can be effected extremely simply by extending or retracting the actuator 53 to maintain the water intake ports 21 within the water 7 in the water vessel 5 or to maintain them above the water level. Furthermore, all the moving parts are installed above the bottom surface of the water vessel 5 so that maintenance and repair is much facilitated.

Whilst all the vertically movable pipes 23y are described as being moved simultaneously, it would be possible to provide one or more further actuators to permit some of them to be moved independently to permit the quantity of dry air 15 to be controlled in response to the climatic conditions, whereby the water cooling efficiency is enhanced and wasteful excess generation of dry air 15 is eliminated.

The inlet means 23 is described as being in the form of a double pipe but alternatively it may be in the form of a bellows.

## Claims

1. A cooling tower including a water vessel (5) in whose base a plurality of water spray ports (6) is formed and below which there is one or more heat exchange units (16; 16a, 16b, 16c) stacked one above the other, the heat exchange unit (16) or at least the upper heat exchange unit (16a) comprising a plurality of heat exchange members (17) extending substantially parallel to one another to define flow passages (18) therebetween and means (2) for passing ambient air transversely through the flow passages to cool the water, the flow passages (18) being associated with respective water spray ports, and the cooling tower including control means (23, 28, 29, 31, 32, 33, 34; 41; 45; 48; 23x, 23y, 53) arranged selectively to permit water to flow through all the water spray ports (6) or to prevent water from flowing through some or all of selected water spray ports, characterised in that the water vessel (5) constitutes a single vessel which, in use, contains a single body of water with which all the water spray ports (6) communicate and that certain heat exchange members (17) which define certain flow passages (24) extend substantially up to the base of the water vessel (5) or are substantially sealed thereto, e.g. by partition plates (17a, 17b), whereby said certain flow passages (24) are associated with the selected water spray ports and communicate exclusively with the respective associated water spray ports and water flowing through the other water spray ports may not enter said certain flow passages (24) associated with the selected water spray ports, whilst the remaining heat exchange members terminate short of the base of the water vessel.

2. A cooling tower as claimed in Claim 1 characterised in that the control means comprise inlet means (23) which communicate with the selected water spray ports and have one or more inlet openings (21) disposed above the water spray ports and liquid level control means (28, 29, 31, 32, 33, 34) for controlling the height of the liquid level in the water vessel and for varying it between levels above and below the inlet openings (21).

3. A cooling tower as claimed in Claim 2 characterised in that the inlet openings (21) of the inlet means (23) associated with different flow passages (24) are arranged at different heights.

4. A cooling tower as claimed in Claim 2 or Claim 3 in which the liquid level control means includes liquid level detectors (31, 32, 33, 34) within the water vessel (5).

5. A cooling tower as claimed in any one of Claims 2 to 4 which includes two or more heat exchange units (16a, 16b, 16c) stacked one above the other, a single water vessel (5) being provided between each adjacent pair of heat exchange units, characterised in that the upper heat exchange unit (16a) and at least one other (16c) are as claimed in Claim 2 and that a water deflecting plate (21a) is provided above each of the inlet openings (21) of the said other heat exchange unit (16c) to prevent water dripping down from the heat exchange unit (16b) above it from falling directly into the inlet openings (21).

6. A cooling tower as claimed in Claim 1 characterised in that the control means comprise valves (41; 45; 48) controlling the selected water spray ports and connected to valve drive means (42) for selectively opening or closing the valves.

7. A cooling tower as claimed in Claim 1 characterised in that the control means comprise inlet means (23x, 23y) of variable height which communicate with the selected water spray ports and have one or more inlet openings (21) disposed above the water spray ports and lifting means (53) arranged to vary the height of the inlet means and thus of the inlet openings (21).

8. A cooling tower as claimed in any one of Claims 1 to 7 characterised by a water deflector (26; 17c, 17d; 46) arranged beneath the selected water spray ports for laterally deflecting water flowing through the water spray ports.

## Patentansprüche

1. Kühlturm, umfassend ein Wassergefäß (5), in dessen Boden eine Mehrzahl von Wassersprühöffnungen (6) ausgebildet sind und unter dem sich ein oder mehrere Wärmetauschereinheiten (16; 16a, 16b, 16c) übereinander gestapelt befinden, wobei die Wärmetauschereinheit (16) oder wenigstens die obere Wärmetauschereinheit (16a) eine Mehrzahl von Wärmetauscher-Bauteilen (17), die sich im wesentlichen parallel zueinander erstrecken, um Strömungskanäle (18) zwischen sich zu definieren, und Mittel (2) zum Führen von Umgebungsluft quer durch die Strömungskanäle, um das Wasser zu kühlen, wobei die Strömungskanäle (18) entsprechenden Wassersprühöffnungen zugeordnet sind und der Kühlturm Steuermittel (23, 28, 29, 31, 32, 33, 34; 41; 45; 48; 23x, 23y, 53) umfaßt, die selektiv angeordnet sind, so daß sie Wasser ermöglichen, durch alle Sprühöffnungen (6) zu strömen, oder Wasser daran hindern, durch einige oder alle der ausgewählten Wassersprühöffnungen zu strömen, dadurch gekennzeichnet, daß das Wassergefäß (5) ein einzelnes Gefäß bildet, das im Gebrauch ein einziges Wasservolumen beinhaltet, mit dem alle Wassersprühöffnungen (6) in Verbindung stehen, und daß bestimmte Wärmetauscher-Bauteile (17), die bestimmte Strömungskanäle (24) definieren, sich im wesentlichen nach oben zum Boden des Wassergefäßes (5) erstrecken oder im wesentlichen mit diesem abgedichtet verbunden sind, z.B. durch Teilungsplatten (17a, 17b), wodurch diese bestimmten Strömungskanäle (24) den ausgewählten Wassersprühöffnungen zugeordnet sind und nur mit den entsprechenden, zugeordneten Wassersprühöffnungen in Verbindung stehen, so daß durch die anderen Wassersprühöffnungen strömendes Wasser nicht in diese bestimmten, den ausgewählten Wassersprühöffnungen zugeordneten Strömungskanäle (24) eindringen kann, während die verbleibenden Wärmetauscher-Bauteile kurz vor dem Boden des Wassergefäßes enden.

2. Kühlturm nach Anspruch 1, dadurch gekennzeichnet, daß das Steuermittel Einlaßmittel (23), die mit den ausgewählten Wassersprühöffnungen in Verbindung stehen und eine oder mehrere oberhalb der Wassersprühöffnungen angeordnete Einlaßöffnungen (21) aufweisen, sowie Flüssigkeitsspiegel-Steuermittel (28, 29, 31, 32, 33, 34) zum Steuern der Höhe des Flüssigkeitsspiegels in dem Wassergefäß und zu dessen Variation zwischen Höhen ober- und unterhalb der Einlaßöffnungen (21) umfaßt.

3. Kühlturm nach Anspruch 2, dadurch gekennzeichnet, daß die verschiedenen Strömungskanälen (24) zugeordneten Einlaßöffnungen (21) der Einlaßmittel (23) in verschiedenen Höhen angeordnet sind.

4. Kühlturm nach Anspruch 2 oder 3, dadurch gekennzeichnet, daß das Flüssigkeitsspiegel-Steuermittel Flüssigkeitsspiegelsensoren (31, 32, 33, 34) innerhalb des Wassergefäßes (5) umfaßt.

5. Kühlturm nach einem der Ansprüche 2 bis 4, der zwei oder mehrere übereinander gestapelte Wärmetauschereinheiten (16a, 16b, 16c) umfaßt, wobei ein einzelnes Wassergefäß (5) zwischen jedem aneinander angrenzenden Paar von Wärmetauschereinheiten angeordnet ist, dadurch gekennzeichnet, daß die obere Wärmetauschereinheit (16a) und wenigstens eine weitere (16c) gemäß Anspruch 2 ausgebildet sind, und daß eine Wasserablenkplatte (21a) oberhalb jeder Einlaßöffnung (21) der anderen Wärmetauschereinheit (16c) angeordnet ist, um zu verhindern, daß von der darüberliegenden Wärmetauschereinheit (16b) heruntertropfendes Wasser direkt in die Einlaßöffnungen (21) fällt.

6. Kühlturm nach Anspruch 1, dadurch gekennzeichnet, daß die Steuermittel Ventile (41; 45; 48) umfassen, welche die ausgewählten Wassersprühöffnungen steuern und mit Ventilantriebsmitteln (42) zum selektiven Öffnen oder Schließen der Ventile verbunden sind.

7. Kühlturm nach Anspruch 1, dadurch gekennzeichnet, daß die Steuermittel Einlaßmittel (23x, 23y) von variabler Höhe umfassen, die mit den ausgewählten Wassersprühöffnungen in Verbindung stehen und eine oder mehrere oberhalb der Wassersprühöffnungen angeordnete Einlaßöffnungen (21) sowie Anhebemittel (53) zum Variieren der Höhe des Einlaßmittels und somit der Einlaßöffnungen (21) aufweisen.

8. Kühlturm nach einem der Ansprüche 1 bis 7, gekennzeichnet durch einen unterhalb der ausgewählten Wassersprühöffnungen angeordneten Wasserdeflektor (26; 17c, 17d; 46) zum seitlichen Ablenken des durch die Wassersprühöffnungen strömenden Wassers.

## Revendications

1. Tour de refroidissement incluant un réservoir d'eau (5) dans la base duquel plusieurs orifices de pulvérisation d'eau (6) sont formés et sous lesquels se trouvent une ou plusieurs unités d'échange de chaleur (16 ; 16a, 16b, 16c) empilées les unes sur les autres, l'unité d'échange de chaleur (16) ou au moins l'unité d'échange de chaleur supérieure (16a) comprenant plusieurs éléments d'échange de chaleur (17) s'étendant essentiellement de manière parallèle l'un par rapport à l'autre pour définir des conduits d'écoulement (18) entre ceux-ci et des moyens (2) destinés à faire circuler l'air ambiant de manière transversale à travers les conduits d'écoulement pour refroidir l'eau, les conduits d'écoulement (18) étant associés aux orifices de pulvérisation d'eau respectifs, et la tour de refroidissement incluant des moyens de commande (23, 28, 29, 31, 32, 33, 34; 41 ; 45; 48; 23x, 23y, 53) disposés de manière sélective pour permettre à l'eau de s'écouler à travers tous les orifices de pulvérisation d'eau (6) ou pour empêcher l'eau de s'écouler à travers certains ou tous les orifices de pulvérisation d'eau, caractérisée en ce que le réservoir d'eau (5) constitue un réservoir unique qui, en pratique, contient un seul corps d'eau avec lequel tous les orifices de pulvérisation d'eau (6) communiquent et en ce que certains éléments d'échange de chaleur (17) qui définissent certains conduits d'écoulement (18) s'étendent essentiellement jusqu'à la base du réservoir d'eau (5) ou sont essentiellement scellés sur celui-ci, par exemple par des plaques de séparation (17a, 17b), certains desdits conduits d'écoulement (18) étant de ce fait associés aux orifices de pulvérisation d'eau sélectionnés communiquant exclusivement avec les orifices de pulvérisation d'eau associés respectifs et l'eau s'écoulant à travers les autres orifices de pulvérisation d'eau ne pouvant pénétrer dans lesdits certains conduits d'écoulement (18) associés aux orifices de pulvérisation d'eau sélectionnés, tandis que le reste des éléments d'échange de chaleur se terminent à proximité de la base du réservoir d'eau.

2. Tour de refroidissement selon la revendication 1, caractérisée en ce que les moyens de contrôle comprennent des moyens d'entrée (23 ) qui communiquent avec les orifices de pulvérisation d'eau sélectionnés et présentent une ou plusieurs ouvertures d'entrée (21) disposées au-dessus des orifices de pulvérisation d'eau et des moyens de contrôle du niveau d'eau (28, 29, 31, 32, 33, 34) destinés à contrôler la hauteur du niveau de liquide dans le réservoir d'eau et à la modifier entre des niveaux au-dessus et au-dessous des ouvertures d'entrée (21).

3. Tour de refroidissement selon la revendication 2, caractérisée en ce que les ouvertures d'entrée (21) des moyens d'entrée (23) associés aux différents conduits d'écoulement ( 18) sont disposées à différentes hauteurs.

4. Tour de refroidissement selon la revendication 2 ou 3, dans laquelle les moyens de contrôle du niveau de liquide incluent des détecteurs de niveau de liquide (31, 32, 33, 34) à l'intérieur du réservoir d'eau (5).

5. Tour de refroidissement selon l'une des revendications 2 à 4, qui inclut deux ou plusieurs unités d'échange de chaleur (16a, 16b, 16c) empilées les unes sur les autres, un seul réservoir d'eau (5) étant fourni entre chaque paire adjacente d'unités d'échange de chaleur, caractérisée en ce que l'unité d'échange de chaleur supérieure (16a) et au moins une autre (16c) sont telles que revendiquées dans la revendication 2 et en ce qu'une plaque de déflexion de l'eau (21a) est fournie au-dessus de chaque ouverture d'entrée (21) de ladite autre unité d'échange de chaleur (16c) pour empêcher l'eau gouttant depuis l'unité d'échange de chaleur (16b) au-dessus de celle-ci de tomber directement dans les ouvertures d'entrée (21).

6. Tour de refroidissement selon la revendication 1, caractérisée en ce que les moyens de contrôle comprennent des soupapes (41 ; 45; 48) contrôlant les orifices de pulvérisation d'eau sélectionnés et connectées à des moyens d'entraînement des soupapes (42) destinés à ouvrir ou à fermer sélectivement les soupapes.

7. Tour de refroidissement selon la revendication 1, caractérisée en ce que les moyens de contrôle comprennent des moyens d'entrée (23x, 23y) de hauteur variable qui communiquent avec les orifices de pulvérisation d'eau sélectionnés et présentent une ou plusieurs ouvertures d'entrée (21) disposées au-dessus des orifices de pulvérisation d'eau et des moyens de levage (53) destinés à modifier la hauteur des moyens d'entrée et de ce fait des ouvertures d'entrée (21).

8. Tour de refroidissement selon l'une des revendications 1 à 7, caractérisée par un déflecteur d'eau (26 ; 17c, 17d ; 46) disposé sous les orifices de pulvérisation d'eau sélectionnés destiné à défléchir latéralement l'eau s'écoulant à travers les orifices de pulvérisation d'eau.
